# EUROPÄISCHE PATENTSCHRIFT

(11) **EP 0 436 175 B1**
(45) Veröffentlichungstag und Bekanntmachung des Hinweises auf die Patenterteilung: **20.03.1996**
(21) Anmeldenummer: 90124482.2
(22) Anmeldetag: 18.12.1990
(51) Int. Cl.: G11B 11/16, G11B 9/00

(54) **Verfahren zur Speicherung von Informationseinheiten im Nanometerbereich**
Method for storage of information units in the nanometer domain
Procédé de stockage d'unités d'information dans le domaine nanométrique

(30) Priorität: 30.12.1989 DE 3943414
(43) Veröffentlichungstag der Anmeldung: 10.07.1991
(73) Patentinhaber: BASF Aktiengesellschaft, D-67063 Ludwigshafen (DE)
(72) Erfinder: Fuchs, Harald, Dr., W-6719 Carlsberg (DE)

(56) Entgegenhaltungen:
- EP-A- 0 272 935
- EP-A- 0 360 337
- US-A- 4 575 822
- IBM JOURNAL OF RESEARCH AND DEVELOPMENT Bd. 30, Nr. 5, September 1986, NEW YORK, N.Y., USA Seiten 492 - 499; D.W. ABRAHAM ET AL.: 'Surface modification with the scanning tunneling microscope'
- APPLIED PHYSICS LETTERS Bd. 55, Nr. 17, 23. Oktober 1989, NEW YORK, N.Y., USA Seiten 244 - 246; U. STAUFER ET AL.: 'Nanometer scale structure fabrication with the scanning tunneling microscope'
- PATENT ABSTRACTS OF JAPAN vol. 14, no. 148 (P-1024)(4091) 20. März 1990

## Beschreibung

Die Erfindung betrifft ein Verfahren zur Speicherung von Informationseinheiten im Nanometerbereich durch Formänderung der Oberfläche eines halbleitenden Schichtmaterials.

Die Speicherung von Informationen, insbesondere von Bild- und Datensignalen, erfolgt derzeit vorwiegend mit Hilfe magnetischer und optischer Aufzeichnungsträger. Die erzielbare Informationsdichte bei derartigen Aufzeichnungsträgern wird bestimmt durch die verfahrensbedingt kleinsten erzeugbaren und wieder auslesbaren Informationseinheiten. Diese sind bei den derzeit üblichen Magnetspeichern bestimmt durch die Größe der magnetischen Domänen (Weiß'sche Bezirke), in mechanischer Hinsicht durch den Kopfspalt der verwendeten Schreib/Leseköpfe sowie durch den Abstand der Schreib/Leseeinheit vom eigentlichen Informationsträger. Bei Informationsträgern, bei denen die eingespeicherte Information durch Änderung der optischen Eigenschaften erzeugt wird, liegt die Begrenzung in der verwendeten Lichtwellenlänge. Hier können somit die kleinsten Informationseinheiten nicht kleiner sein als etwa die halbe Lichtwellenlänge. Eine Steigerung der Speicherdichte bei derartigen optischen Aufzeichnungsträgern ist inzwischen auch durch die sogenannte optische Nahfeldmikroskopie erreichbar, wobei sich die optische Ausleseeinheit nur wenige Nanometer über der informationstragenden Oberfläche befindet. Erreicht werden hierbei Informationsdichten, die sich bestenfalls in der Größenordnung von etwa 20 nm befinden.

Eine weitere Steigerung der Informationsdichte ist nur möglich durch die Anwendung von Nahfeldtechniken mit einer Auflösung im Subnanometerbereich. Hierzu eignen sich die sogenannten Raster-Sonden-Techniken zu denen das Raster-Tunnel-Mikroskop bzw. das Kraft-Mikroskop gehören. Diese Methoden erlauben Abbildungen von Oberflächen auf atomarer Skala. Es wurde daher schon vorgeschlagen, Informationsspeicher mit der höchstmöglichen Dichte, nämlich im Bereich der einzelnen Atome bzw. Moleküle, zu erzeugen. Die Realisierung dieser Speicher würde zu Informationsdichten führen, welche im Terabyte-Bereich pro cm liegen.

Zur Speicherung von Informationen im Nanometerbereich auf anorganischen oder organischen Oberflächen gibt es bereits eine Reihe von Vorschlägen, so u.a. M.A. McCord et al., J.Vac. Sci. Technol. Bd. 86 - 88 (1986), D.W. Abraham et al., J.of Res. and Dev., Bd. 30, Nr. 5, Sept. 86, Seiten 492 - 499, R.M. Silver et al., Appl.Phys.-Lett. 51, 247-249 (1987), U. Staufer et al., J.Vac. Sci. Technol. A6, 537-539 (1988) sowie US-A-4 575 822 (C.F.Quate). Auch über die Abscheidung einzelner Atome wurde schon berichtet (R.S.Becker et al., Nature 325, 415-421 (1987)).

Alle bisher bekanntgewordenen Vorschläge, höchstauflösende Informationsspeicher, welche insbesondere auch über lange Zeit stabil sind, bereitzustellen, konnten jedoch nicht befriedigen. Während es bei den organischen Speichern noch nicht gelungen ist, Linienbreiten von <10 nm zu erzeugen, war es bei anorganischen Systemen, welche Strukturen von bis herab zu 3 nm ergaben, nicht möglich, diese auch über längere Zeit, d.h. über Minuten zu Stunden, stabil zu halten. Bei den bis jetzt bekannt gewordenen zeitlich stabilen Strukturen in Silicium (Appl.Phys.Lett. Van Loenen et al., (1989) 55, 1312-1314 bzw. EP-A 0 360 337) wird dagegen die atomare Struktur zerstört, d.h. die atomare Ordnung geht verloren. Dies bedeutet, daß das Verfahren von van Loenen nicht geignet ist, stabile bzw. reversible Strukturen mit Erhalt der atomaren Ordnung nach dem Strukturierungsprozess durchzuführen. Van Loenen et al. setzen für ihre Experimente Silizium-Oberflächen ein, die in elementar reiner Form aufgrund ihrer chemischen Reaktivität nur unter Ultrahochvakuumbedingungen für die Nanostrukturierung nutzbar sind. Unter normalen atmosphärischen Bedingungen tritt innerhalb weniger Sekunden Oxidation ein, wobei das Oxid in amorpher Form vorliegt.

Ein solches Verfahren eignet sich daher nur zur Erzeugung nicht löschbarer Speicher durch Zerstörung der lokalen atomaren Ordnung in strukturierten Bereichen, wobei zur Erzeugung dieser Strukturen Ultrahochvakuumbedingungen nötig sind.

Die genannten Veröffentlichungen beschreiben nicht die Herstellung von Nanostrukturen mit Erhalt der atomaren Ordnung innerhalb der modifizierten Bereiche. In allen Fällen wird die Oberfläche bzw. die atomare Ordnung der Oberfläche durch die beschriebenen Methoden lokal zerstört. Gemeinsam ist diesen Methoden lediglich, daß zum Schreiben und Lesen der Strukturierung ein Rastertunnelmikroskop bzw. Rasterkraftmikroskop eingesetzt wird.

Aufgabe der vorliegenden Erfindung war es daher, ein Verfahren zur Speicherung von Informationseinheiten im Nanometerbereich bereitzustellen, mit dem insbesondere eine zeitlich stabile Speicherung von Informationen möglich ist, ohne die lokale Gitterstruktur zu zerstören.

Es wurde nun gefunden, daß sich die Aufgabe mit einem Verfahren zur zeitlich stabilen Speicherung von Informationseinheiten im Nanometerbereich mittels einer oberflächensensitiven Rastersonde dadurch lösen läßt, daß die Oberfläche eines halbleitenden Schichtmaterials mittels einer oberflächensensitiven Rastersonde ohne Veränderung der atomaren Ordnung plastisch verformt wird.

Die plastische Verformung der Oberfläche des halbleitenden Schichtmaterials mittels der oberflächensensitiven Rastersonde ohne Veränderung der atomaren Ordnung läßt sich in einer erfindungsgemäßen Ausgestaltung durch mechanische Krafteinwirkung oder durch das Anlegen eines kurzzeitigen elektrischen Feldes bewirken. Die plastische Verformung der Oberfläche kann beispielsweise mit Hilfe eines Rastertunnelmikroskops oder eines Rasterkraftmikroskops bzw. ähnliche Sondenmethoden geschehen, die eine nadelförmige Sonde als Schreib-/Lesekopf einzusetzen erlauben. Wie oben ausgeführt, sind hierzu unterschiedliche Strategien bereits früher beschrieben worden. Daher kann der Einsatz von Rastersondenmethoden für die Nanostrukturierung als bekannt vorausgesetzt werden und ist nicht Gegenstand der vorliegenden Erfindung.

In einer weiteren Ausgestaltung läßt sich die gemäß dem erfindungsgemäßen Verfahren vorgenommene Speicherung von Informationseinheiten in Form einer strukturierten Oberfläche jedoch ohne Veränderung der atomaren Ordnung durch Zufuhr von Energie durch Relaxation wieder in den ursprünglichen Zustand überführen, d.h. die Information löschen. Geeignet ist hierfür insbesondere die Zufuhr von thermischer Energie durch flächiges Aufheizen oder auch durch flächige und punktuelle Laserbehandlung.

Bei der Durchführung des erfindungsgemäßen Verfahren wird von einer halbleitenden Schicht ausgegangen, welche beispielsweise aus WSe₂ oder anderen bekannten halbleitenden Schichten auf Basis der Selenide, Telluride und Sulfide besteht. Die Oberfläche einer solchen Schicht wird nun mit Hilfe der Nahfeldtechnik durch eine oberflächensensitive Rastersonde plastisch verformt. Diese meist kreisförmigen oder ovalen Vertiefungen entstehen dabei, ohne daß die atomare Ordnung des schichtbildenden Materials gestört wird. Anschließend läßt sich die plastisch verformte Oberfläche des Schichtmaterials durch z.B. thermisches Behandeln, wie es u.a. durch einen IR-Laserbeschuß möglich ist, sehr schnell wieder in die ursprünglich nicht strukturierte Form überführen. Für die zum Einschreiben der Informationen verwendete Nahfeldtechnik lassen sich die bekannten Verfahren der Raster-Tunnel-Mikroskopie bzw. der Kraft-Mikroskopie einsetzen. Die Anordnung dieser Nahfeldtechniken ist zur Charakterisierung von Oberflächen bekannt und auch beschrieben (Y. Kuk et al., Rev.Sci.Instrum. 60(2), 165-180 (1989)).

Das erfindungsgemäße Verfahren sei im folgenden beispielhaft erläutert:

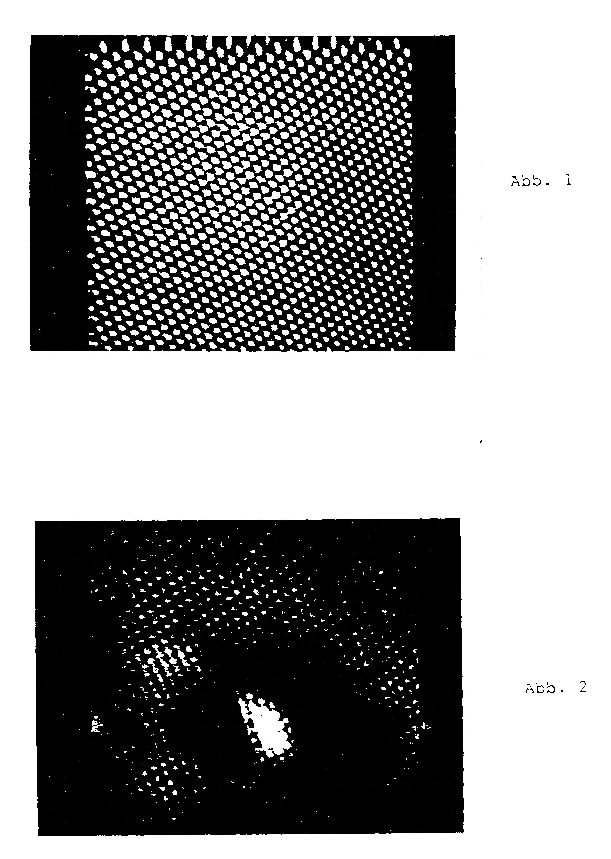

Eine Probe einer Wolframdiselenidschicht wurde in einem Raster-Tunnel-Mikroskop unter Hochvakuumbedingungen zunächst atomar abgebildet. Abbildung 1 zeigt eine solche atomare Anordnung der Wolframdiselenidoberfläche. Danach wurde durch ein definiertes kurzzeitiges Verfahren der RTM-Spitze in Richtung der Probenoberfläche (die Auslenkung betrug 10 nm) die Wolframdiselenidoberfläche plastisch mit der RTM-Spitze deformiert. Anschließend wurde der so gesetzte Oberflächendefekt mit der gleichen Spitze betrachtet. Die veränderte Oberfläche zeigt Abbildung 2. Wesentlich an dieser strukturierten Oberfläche ist, daß die Vertiefung in ihrer atomaren Nahordnung nicht gestört ist. Sie beträgt etwa 2,5 nm im Durchmesser und weist eine Tiefe von etwa 7 Å auf. Diese Oberflächenverformung ist stabil und läßt sich nur durch thermische Behandlung wieder in die ursprüngliche glatte Form zurückbringen. Die in Abbildung 2 dargestellte Fläche beträgt ca. 100 Å und bietet Platz für vier der gezeigten Oberflächenverformungen. Daraus resultiert eine Speicherdichte pro µm von 4·10⁴ bit (4·10³ byte). Pro mm ergeben sich demnach 4·10⁹ byte und pro cm 4·10¹¹ byte oder 4 Terabit/cm.

## Patentansprüche

1. Verfahren zur zeitlich stabilen Speicherung von Informationseinheiten im Nanometerbereich mittels einer oberflächensensitiven Rastersonde, dadurch gekennzeichnet, daß die Oberfläche eines halbleitenden Schichtmaterials mittels einer oberflächensensitiven Rastersonde ohne Veränderung der atomaren Ordnung plastisch verformt wird.

2. Verfahren gemäß Anspruch 1, dadurch gekennzeichnet, daß die plastische Verformung der Oberfläche mittels der oberflächensensitiven Rastersonde durch mechanische Krafteinwirkung erfolgt.

3. Verfahren gemäß Anspruch 1, dadurch gekennzeichnet, daß die plastische Verformung der Oberfläche mittels der oberflächensensitiven Rastersonde durch Anlegen eines kurzzeitigen elektrischen Feldes bewirkt wird.

4. Verfahren zum Löschen von Informationseinheiten im Nanometerbereich, welche durch plastische Verformung der Oberfläche eines halbleitenden Schichtmaterials mittels einer oberflächensensitiven Rastersonde ohne Veränderung der atomaren Ordnung nach einem der Ansprüche 1 bis 3 gespeichert wurde, dadurch gekennzeichnet, daß die Beseitigung der Verformung mittels Zufuhr von thermischer Energie erfolgt.

## Claims

1. A process for the stable storage of information units in the nanometer range by means of a surface-sensitive scanning probe, wherein the surface of a semiconducting laminate material is subjected to plastic deformation by means of a surface-sensitive scanning probe without modifying the atomic order.

2. A process as claimed in claim 1, wherein the plastic deformation of the surface is effected by the action of mechanical force using the surface-sensitive scanning probe.

3. A process as claimed in claim 1, wherein the plastic deformation of the surface is effected by applying a short-duration electrical field by means of the surface-sensitive scanning probe.

4. A process for erasing information units in the nanometer range which have been stored by subjecting the surface of a semiconducting laminate material to plastic deformation by means of a surface-sensitive scanning probe without modifying the atomic order as claimed in any of claims 1 to 3, wherein the deformation is removed by supplying thermal energy.

## Revendications

1. Procédé de stockage stable chronologique d'unités d'information dans la plage nanométrique au moyen d'une sonde à balayage, sensible en surface, caractérisé en ce que la surface d'un matériau en couche semi-conducteur est déformée plastiquement au moyen d'une sonde à balayage sensible en surface, sans modification de l'ordonnancement atomique.

2. Procédé selon la revendication 1, caractérisé en ce que la déformation plastique de la surface s'effectue au moyen de la sonde à balayage, sensible en surface, par l'action mécanique d'une force.

3. Procédé selon la revendication 1, caractérisé en ce que la déformation plastique de la surface est provoquée au moyen de la sonde à balayage sensible en surface, par application d'un champ électrique de courte durée.

4. Procédé d'effacement d'unités d'information dans la plage nanométrique, ces unités d'information ayant été stockées par déformation plastique de la surface d'un matériau en couche semi-conducteur au moyen d'une sonde à balayage sensible en surface, sans modification de l'ordonnancement atomique, selon l'une des revendications 1 à 3, caractérisé en ce que l'élimination de la déformation s'effectue par un apport d'énergie thermique.
